# FASCICULE DE BREVET EUROPEEN

(11) **EP 2 674 606 B1**
(45) Date de publication et mention de la délivrance du brevet: **12.10.2016**
(21) Numéro de dépôt: 13171455.2
(22) Date de dépôt: 11.06.2013
(51) Int. Cl.: F02M 35/12, F02B 33/00, F02B 37/00, F02M 35/10, F02B 33/44

(54) **Système de raccordement et d'atténuation acoustique pour ligne d'admission de moteur turbocompressé, et cette ligne d'admission.**
Anschlusssystem und Lärmdämpfungssystem für Einlassleitung eines Turbokompressormotors, und entsprechende Einlassleitung.
Connection and sound attenuation system for intake line of a turbocharged engine, and said inlet line.

(30) Priorité: 12.06.2012 FR 1255486
(43) Date de publication de la demande: 18.12.2013
(73) Titulaire: HUTCHINSON, 75008 Paris (FR)
(72) Inventeur: Lonni, Aurélien, 45200 Montargis (FR); Bourdariat, Antoine, 45120 Châlette sur Loing (FR); Caliskan, Alper, 45140 Saint Jean de la Ruelle (FR)
(74) Mandataire: Gevers & Orès

(56) Documents cités:
- EP-A1- 0 573 895
- WO-A2-2012/021361
- DE-A1-102006 038 830
- JP-A- 2000 045 782

## Description

La présente invention concerne un système de raccordement et d'atténuation acoustique pour une ligne d'admission d'un moteur thermique turbocompressé de véhicule automobile, le système étant destiné à être parcouru par un flux gazeux sous pression et à être monté entre un turbocompresseur et un échangeur thermique de la ligne.

De manière connue, les dispositifs d'atténuation acoustique pour ligne d'admission d'un moteur turbocompressé de véhicule automobile peuvent comporter une enveloppe tubulaire radialement externe qui est destinée à être parcourue par un fluide gazeux sous pression, tel que de l'air chargé d'huile, et avec les portions d'extrémités de laquelle est solidarisée une structure de conduite radialement interne formant deux chambres annulaires de résonance avec l'enveloppe. On peut par exemple citer le document DE-A1-199 56 172 pour la description d'un tel dispositif, dans lequel deux renflements de l'enveloppe sont reliés entre eux par un rétrécissement radial périphérique dont est solidaire un tronçon médian de la structure de conduite interne, laquelle comporte deux autres tronçons d'extrémité respectivement solidaires des deux portions d'extrémité de l'enveloppe.

Ces dispositifs d'atténuation connus, qui sont intégralement métalliques ou bien entièrement réalisés en matière plastique rigide, sont usuellement raccordés à la ligne d'admission d'air par des tuyaux de raccordement en caoutchouc permettant la prise de rayons de courbure déterminés en fonction de la configuration de la ligne et de la place disponible, des colliers de serrage venant enserrer les points de raccordement entre les extrémités respectives du dispositif et ces tuyaux. En variante, on peut réaliser ces raccordements par soudage ou brasage des extrémités du dispositif d'atténuation sur des tubulures métalliques intermédiaires.

Le document EP-B1-2 128 425 au nom de la Demanderesse présente un dispositif d'atténuation qui est intégré à la ligne d'admission par deux tuyaux de raccordement flexibles formant une enveloppe pour le dispositif et qui comporte une structure de conduite interne métallique ou plastique solidaire de ces tuyaux et délimitant avec ceux-ci deux chambres annulaires de résonance. Ces tuyaux sont montés axialement de part et d'autre et au contact d'une collerette radiale de la structure de conduite, et des moyens de serrage sont appliqués sur ces tuyaux pour les plaquer de manière étanche sur la structure de conduite.

Le document de Brevet FR-A1-2 937 686 présente un dispositif d'atténuation en matière plastique qui est axialement juxtaposé au tuyau flexible de raccordement au lieu d'être enserré par ce dernier.

WO 2012/021361 A2 divulgue également un dispositif d'atténuation axialement juxtaposé au tuyau flexible de raccordement.

Un inconvénient majeur de ces dispositifs d'atténuation
connus réside dans leur encombrement relativement important au sein d'un environnement moteur d'espace réduit, en raison des renflements de l'enveloppe qui forment les chambres de résonance en s'écartant d'une hauteur radiale relativement importante de la structure de conduite interne.

Un autre inconvénient de ces dispositifs d'atténuation connus en matière plastique réside dans les opérations d'assemblage des divers éléments du dispositif, notamment par soudure, incluant leur raccordement à la ligne d'admission. En effet, la soudure n'est pas toujours parfaitement maîtrisée pour certaines géométries complexes, ce qui peut générer des fuites du gaz sous pression ainsi que des pertes acoustiques, et impose alors d'utiliser en plus un joint d'étanchéité qui complique le procédé de fabrication et donc augmente le coût de fabrication du dispositif. De plus, les normes de propreté en vigueur étant de plus en plus sévères, les bavures générées par l'opération de soudure doivent être minimisées.

Un but de la présente invention est de proposer un système de raccordement et d'atténuation acoustique pour une ligne d'admission d'un moteur thermique turbocompressé de véhicule automobile, le système étant destiné à être parcouru par un flux gazeux sous pression et à être monté entre un turbocompresseur et un échangeur thermique de la ligne, système qui remédie aux inconvénients précités et qui comprenne :
- un tuyau flexible de raccordement à la ligne, tel qu'une durite élastomère multicouches, et
- un dispositif d'atténuation acoustique non métallique qui est adapté pour être fixé à une bride de sortie du turbocompresseur extérieure au tuyau et qui est enserré radialement par le tuyau en y formant des chambres acoustiques.

A cet effet, un système de raccordement et d'atténuation acoustique selon l'invention est tel que ce dispositif comprend au moins deux parties solidaires l'une de l'autre par clipsage dont une première partie est pourvue de moyens de fixation à ladite bride et dont une seconde partie définit l'une au moins desdites chambres avec la première partie.

Par « clipsage », on entend de manière connue dans la présente description un assemblage par pincement ou déformation élastique des parties concernées.

On notera que ce clipsage des divers composants du dispositif, qui est pratiquement invisible de l'extérieur, combiné à l'assemblage du dispositif au tuyau flexible l'enserrant et à la bride de sortie du thermocompresseur, permet non seulement de réaliser l'atténuation acoustique en évitant les inconvénients précités liés aux opérations de soudure, mais encore ne génère pas de volume supplémentaire dans la direction radiale pour cette atténuation du fait de l'insertion du dispositif dans le tuyau.

Selon une autre caractéristique de l'invention, le dispositif peut présenter une géométrie globalement tubulaire et être à base d'au moins une matière plastique ou composite avantageusement moulée par injection, lesdites première et seconde parties pouvant être clipsées l'une sur l'autre selon une ligne de clipsage continue ou discontinue sensiblement circulaire autour d'un axe de symétrie du dispositif.

Cette ligne de clipsage peut ainsi être définie par une ou plusieurs zones régulièrement espacées dans la direction circonférentielle qui sont chacune le siège d'un pincement ou déformation élastique de l'une desdites parties par l'autre.

Selon une autre caractéristique de l'invention, ladite première partie peut présenter :
- une portion de fixation radiale axialement externe au tuyau, de géométrie annulaire et comprenant lesdits moyens de fixation,
- une portion axiale en contact avec une face interne du tuyau et définissant ladite au moins une chambre avec ladite seconde partie, et
- une autre portion axiale de diamètre minimal pour le dispositif.

Avantageusement, ladite seconde partie peut présenter un tronçon axial de diamètre minimal pour le dispositif, lequel tronçon axial peut définir par au moins un espace axial annulaire ou en arc de cercle ladite au moins une chambre avec ladite portion axiale en contact avec le tuyau qui lui fait face radialement.

On notera qu'un système selon l'invention dont le dispositif interne est assemblé par clipsage et est intégré au tuyau de raccordement permet avantageusement d'obtenir une meilleure performance acoustique que les systèmes classiques à renflements circonférentiels, notamment grâce à l'encombrement réduit de ce système de l'invention.

Selon un premier exemple de réalisation de l'invention:
- dans ladite première partie, ladite portion axiale en contact avec le tuyau est située axialement entre ladite portion de fixation radiale et ladite portion axiale de diamètre minimal, une portion radiale de liaison reliant ces deux portions axiales entre elles et définissant une dite chambre de résonance en relation avec cette portion axiale de diamètre minimal et avec le tuyau, et
- ladite seconde partie est constituée dudit tronçon axial de diamètre minimal dont la paroi cylindrique présente des lumières traversantes par exemple en arc de cercle, ce tronçon axial étant clipsé sur ladite portion radiale de liaison et ces lumières définissant une dite chambre de résonance en relation avec cette portion radiale de liaison et ladite portion axiale en contact avec le tuyau.

Selon un second exemple de réalisation de l'invention:
- dans ladite première partie, ladite portion axiale de diamètre minimal est située axialement entre ladite portion de fixation radiale et ladite portion axiale en contact avec le tuyau, une portion radiale de liaison reliant ces deux portions axiales entre elles, et
- ladite seconde partie comporte ledit tronçon axial de diamètre minimal qui se prolonge radialement vers l'extérieur par un tronçon radial de liaison puis par un tronçon axial auxiliaire de diamètre externe sensiblement égal au diamètre interne de ladite portion axiale en contact avec le tuyau qui est clipsée sur ce tronçon axial auxiliaire, le tronçon axial de diamètre minimal définissant une première dite chambre de résonance en une extrémité libre de ce tronçon axial en relation avec lesdites première et seconde parties et avec le tuyau, et une seconde dite chambre de résonance axialement entre son autre extrémité libre et ladite portion axiale de diamètre minimal en relation avec lesdites première et seconde parties.

On notera qu'un système selon ces premier ou second exemples de l'invention permet en particulier d'atténuer des fréquences allant de 1000 à 4000 Hz dans la ligne d'admission d'air entre le turbocompresseur et l'échangeur thermique.

Selon l'invention, ledit système peut comporter en outre des moyens de serrage du tuyau au droit du dispositif qui enserrent ce tuyau à proximité immédiate d'une extrémité libre du tuyau qui est destinée à être montée adjacente à ladite bride.

Avantageusement, lesdits moyens de serrage peuvent comprendre au moins un collier de serrage monté au droit d'une portion axiale de ladite première partie épousant la face interne du tuyau.

Selon un autre aspect de l'invention, ledit système comporte en outre ladite bride (qui peut être indifféremment métallique ou plastique), sur laquelle est fixée ladite première partie par lesdits moyens de fixation, tels que des vis, qui traversent à la fois la bride et une portion de fixation radiale de cette première partie qui est axialement externe au tuyau et juxtaposée contre cette bride, laquelle présente une paroi radiale annulaire définissant une section de passage pour le fluide sensiblement égale à une section de passage minimale commune auxdites première et seconde parties.

Une ligne d'admission selon l'invention d'un moteur thermique turbocompressé de véhicule automobile est telle qu'elle comporte un système de raccordement et d'atténuation acoustique tel que défini ci-dessus.

D'autres avantages, caractéristiques et détails de l'invention ressortiront du complément de description qui va suivre en référence à des dessins annexés, donnés uniquement à titre d'exemples et dans lesquels :
la figure 1 est une vue schématique en section axiale semi-éclatée d'un système de raccordement et d'atténuation acoustique selon le premier exemple de l'invention, et
la figure 2 est une vue schématique en section axiale semi-éclatée d'un système de raccordement et d'atténuation acoustique selon le second exemple de l'invention.

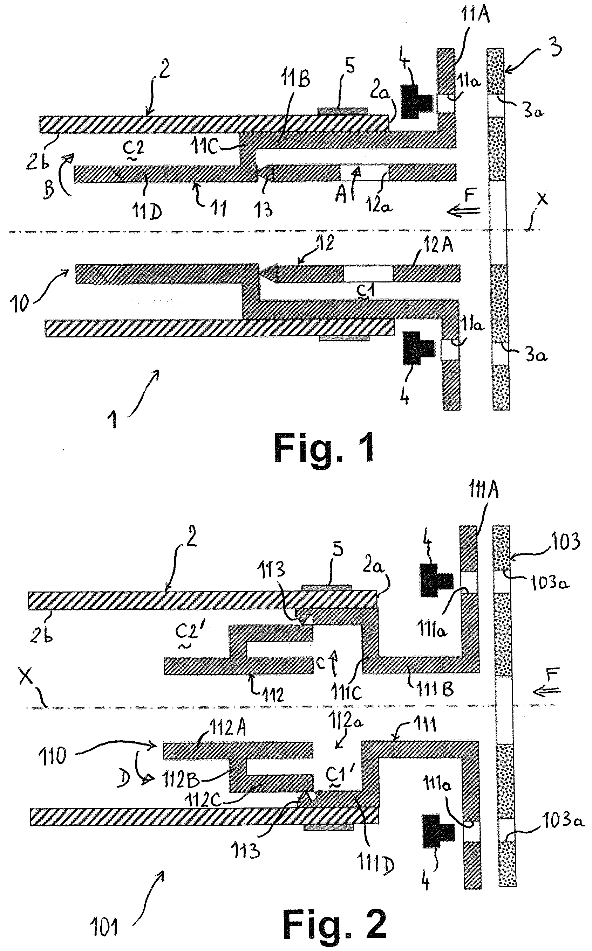

Les systèmes de raccordement et d'atténuation acoustique 1, 101 des figures 1 et 2, qui sont destinés à être intégrés à une ligne d'admission d'un moteur turbocompressé entre un turbocompresseur et un échangeur thermique de la ligne, comprennent chacun un tuyau flexible élastomère et multicouches 2 de raccordement à la ligne, et un dispositif d'atténuation tubulaire 10, 110 par exemple thermoplastique moulé par injection qui est inséré dans le tuyau 2 à l'exception de sa portion radiale de fixation 11A, 111 A que l'on fixe par des vis 4 à une bride de sortie 3, 103 du turbocompresseur axialement extérieure au tuyau 2. Ce tuyau 2 enserre radialement le dispositif 10, 110 au moyen d'un collier de serrage 5 appliqué près de l'extrémité 2a du tuyau 2 adjacente à la bride 3, 103.

Le dispositif 10 de la figure 1 comprend deux première et seconde parties tubulaires 11 et 12 qui sont clipsées l'une sur l'autre, la ligne de clipsage étant symbolisée par des saillies triangulaires 13 visibles sur la seconde partie 12 et adaptées pour coopérer par pincement ou déformation élastique avec des logements correspondants (non visibles) de la première partie 11, étant précisé que l'on pourrait prévoir à l'inverse ces saillies sur la première partie 11 et les logements les recevant par clipsage sur la seconde partie 12, sans sortir du cadre de l'invention. Cette ligne de clipsage 13 peut former un cercle continu ou non autour de l'axe de symétrie X du dispositif 10.

La première partie 11 du dispositif 10 comprend :
- la portion radiale et annulaire de fixation 11A présentant des trous 11a à positionner en regard de trous correspondants 3a de la bride 3 pour l'insertion et le serrage des vis 4 dans ces trous 11a et 3a,
- une portion tubulaire axiale 11 B prolongeant à angle droit la portion de fixation 11A et montée au contact de la face interne 2b du tuyau 2 au droit du collier de serrage 5,
- une courte portion radiale et annulaire de liaison 11C prolongeant radialement vers l'intérieur la portion 11 B, et
- une autre portion tubulaire axiale 11 D de diamètre minimal pour le dispositif 10 et de longueur analogue à celle de la portion 11 B.

La seconde partie 12 du dispositif 10 comprend uniquement un tronçon tubulaire axial 12A de diamètre égal à celui de la portion axiale 11 D et dont la paroi cylindrique présente des lumières traversantes ou ajours 12a par exemple en arcs de cercle. Ce tronçon axial 12A présente une longueur axiale identique à celle de la portion axiale 11B, et il est clipsé axialement contre la portion radiale de liaison 11C de la première partie 11.

Comme illustré par les flèches A et B à la figure 1, la première partie 11 définit, d'une part, avec la seconde partie 12 une première chambre acoustique annulaire de résonance C1 définie par les lumières 12a et délimitée par la portion radiale 11C et la portion axiale 11 B, et, d'autre part, avec le tuyau 2 une seconde chambre acoustique annulaire de résonance C2 délimitée par la portion axiale 11 D, la portion de liaison 11C et le tuyau 2.

Le dispositif 110 de la figure 2 comprend deux première et seconde parties tubulaires 111 et 112 qui sont clipsées l'une sur l'autre, la ligne de clipsage étant symbolisée par des saillies triangulaires 113 visibles sur la première partie 111 et adaptées pour coopérer par pincement ou déformation élastique avec des logements correspondants (non visibles) de la seconde partie 112, étant précisé que l'on pourrait prévoir à l'inverse ces saillies sur la seconde partie 112 et les logements les recevant par clipsage sur la première partie 111, sans sortir du cadre de l'invention. Cette ligne de clipsage 113 peut également former un cercle continu ou non autour de l'axe de symétrie X du dispositif 110.

La première partie 111 du dispositif 110 comprend :
- la portion radiale et annulaire de fixation 111A présentant des trous 111a à positionner en regard de trous correspondants 103a de la bride 103 pour l'insertion et le serrage des vis 4 dans ces trous 111a et 103a,
- une portion tubulaire axiale de diamètre minimal 111B prolongeant à angle droit la portion 111A et se terminant radialement au droit de l'extrémité adjacente 2a du tuyau 2,
- une portion annulaire radiale de liaison 111C prolongeant radialement vers l'extérieur la portion 111 B, et
- une courte portion tubulaire axiale 111 D prolongeant à angle droit la portion 111C et montée au contact du tuyau 2.

La seconde partie 112 du dispositif 110 comprend :
- un tronçon tubulaire axial 112A de diamètre égal à celui de la portion 111B et ménageant avec cette portion 111 B un espace annulaire 112a s'étendant dans la direction axiale,
- un court tronçon annulaire radial de liaison 112B qui prolonge radialement vers l'extérieur le tronçon 112A en une zone médiane de ce dernier, et
- un autre tronçon tubulaire axial 112C de diamètre externe sensiblement égal au diamètre interne de la portion 111 D, laquelle est clipsée radialement sur ce tronçon 112C au voisinage de son extrémité libre.

Comme illustré par les flèches C et D à la figure 2, la première partie 111 définit, d'une part, avec la seconde partie 112 une première chambre acoustique annulaire de résonance C1' définie par l'espace axial 112a et délimitée par la portion 111C, la portion 111 D, le tronçon 112B et le tronçon 112C et, d'autre part, avec le tuyau 2 une seconde chambre acoustique annulaire de résonance C2' délimitée par les tronçons 112A, 112B, 112C et le tuyau 2.

D'une manière générale en référence aux deux exemples de réalisation précités, on notera que le tuyau 2 recevant le dispositif d'atténuation 1, 101 selon l'invention peut être cintré et/ou coudé en un ou plusieurs emplacement(s), étant précisé que ce dispositif 1, 101 est inséré en une portion rectiligne de ce tuyau 2.

## Revendications

1. Système de raccordement et d'atténuation acoustique (1, 101) pour une ligne d'admission d'un moteur thermique turbocompressé de véhicule automobile, le système étant destiné à être parcouru par un flux gazeux (F) sous pression et à être monté entre un turbocompresseur et un échangeur thermique de la ligne et comprenant :
- un tuyau flexible (2) de raccordement à la ligne, et
- un dispositif d'atténuation acoustique (10, 110) non métallique qui est adapté pour être fixé à une bride de sortie (3, 103) du turbocompresseur extérieure au tuyau et qui est enserré radialement par le tuyau en y formant des chambres acoustiques (C1 et C2, C1' et C2'),
ce dispositif comprenant au moins deux parties (11 et 12, 111 et 112) solidaires l'une de l'autre par clipsage dont une première partie (11, 111) est pourvue de moyens de fixation (4) à ladite bride et dont une seconde partie (12, 112) définit l'une au moins desdites chambres avec la première partie,
**caractérisé en ce qu'**il comporte en outre des moyens de serrage (5) du tuyau (2) au droit du dispositif (10, 110) qui enserrent ce tuyau à proximité immédiate d'une extrémité libre (2a) du tuyau qui est destinée à être montée adjacente à ladite bride (3, 103)..

2. Système (1, 101) selon la revendication 1, **caractérisé en ce que** le dispositif (10, 110) présente une géométrie globalement tubulaire et est à base d'au moins une matière plastique ou composite, lesdites première et seconde parties (11 et 12, 111 et 112) étant clipsées l'une sur l'autre selon une ligne de clipsage (13, 113) continue ou discontinue sensiblement circulaire autour d'un axe de symétrie (X) du dispositif.

3. Système (1, 101) selon la revendication 2, **caractérisé en ce que** ladite première partie (11, 111) présente :
- une portion de fixation radiale (11A, 111A) axialement externe au tuyau (2), de géométrie annulaire et comprenant lesdits moyens de fixation (4),
- une portion axiale (11B, 111D) en contact avec une face interne (2b) du tuyau et définissant ladite au moins une chambre (C1, C1') avec ladite seconde partie (12, 112), et
- une autre portion axiale (11D, 111 B) de diamètre minimal pour le dispositif.

4. Système (1, 101) selon la revendication 3, **caractérisé en ce que** ladite seconde partie (12, 112) présente un tronçon axial (12A, 112A) de diamètre minimal pour le dispositif, lequel tronçon axial définit par au moins un espace axial annulaire (112a) ou en arc de cercle (12a) ladite au moins une chambre (C1, C1') avec ladite portion axiale (11 B, 111 D) en contact avec le tuyau (2) qui lui fait face radialement.

5. Système (1) selon les revendications 3 et 4, **caractérisé en ce que** :
- dans ladite première partie (11), ladite portion axiale (11 B) en contact avec le tuyau (2) est située axialement entre ladite portion de fixation radiale (11A) et ladite portion axiale de diamètre minimal (11 D), une portion radiale de liaison (11C) reliant ces deux portions axiales entre elles et définissant une dite chambre de résonance (C2) en relation avec cette portion axiale de diamètre minimal et avec le tuyau, et **en ce que**
- ladite seconde partie (12) est constituée dudit tronçon axial de diamètre minimal (12A) dont la paroi cylindrique présente des lumières traversantes (12a) par exemple en arc de cercle, ce tronçon axial étant clipsé sur ladite portion radiale de liaison et ces lumières définissant une dite chambre de résonance (C1) en relation avec cette portion radiale de liaison et ladite portion axiale en contact avec le tuyau.

6. Système (101) selon les revendications 3 et 4, **caractérisé en ce que** :
- dans ladite première partie (111), ladite portion axiale de diamètre minimal (111B) est située axialement entre ladite portion de fixation radiale (111A) et ladite portion axiale (111 D) en contact avec le tuyau (2), une portion radiale de liaison (111C) reliant ces deux portions axiales entre elles, et **en ce que**
- ladite seconde partie (112) comporte ledit tronçon axial de diamètre minimal (112A) qui se prolonge radialement vers l'extérieur par un tronçon radial de liaison (112B) puis par un tronçon axial auxiliaire (112C) de diamètre externe sensiblement égal au diamètre interne de ladite portion axiale (111 D) en contact avec le tuyau qui est clipsée sur ce tronçon axial auxiliaire, le tronçon axial de diamètre minimal définissant une première dite chambre de résonance (C2') en une extrémité libre de ce tronçon axial en relation avec lesdites première et seconde parties et avec le tuyau, et une seconde dite chambre de résonance (C1') axialement entre son autre extrémité libre et ladite portion axiale de diamètre minimal (111 B) en relation avec lesdites première et seconde parties.

7. Système (1, 101) selon l'une des revendications précédentes, **caractérisé en ce que** lesdits moyens de serrage (5) comprennent au moins un collier de serrage (5) monté au droit d'une portion axiale (11 B, 111 D) de ladite première partie (11, 111) épousant la face interne (2b) du tuyau (2).

8. Système (1, 101) selon une des revendications précédentes, **caractérisé en ce qu'**il comporte en outre ladite bride (3, 103), sur laquelle est fixée ladite première partie (11, 111) par lesdits moyens de fixation (4), tels que des vis, qui traversent à la fois la bride et une portion de fixation radiale (11 A, 111A) de cette première partie qui est axialement externe au tuyau (2) et juxtaposée contre cette bride, laquelle présente une paroi radiale annulaire définissant une section de passage pour le fluide (F) sensiblement égale à une section de passage minimale commune auxdites première et seconde parties (11 et 12, 111 et 112).

9. Ligne d'admission d'un moteur thermique turbocompressé de véhicule automobile, **caractérisée en ce qu'**elle comporte un système de raccordement et d'atténuation acoustique (1, 101) selon une des revendications précédentes.

## Patentansprüche

1. Anschluss- und Lärmdämpfungssystem (1, 101) für eine Einlassleitung eines Turbokompressor-Verbrennungsmotors eines Kraftfahrzeugs, wobei das System bestimmt ist, von einem Gasstrom (F) unter Druck durchquert zu werden und zwischen einem Turbokompressor und einem Wärmetauscher der Leitung montiert zu sein und umfasst:
- einen Anschlussschlauch (2) an die Leitung, und
- eine nichtmetallische Lärmdämpfungsvorrichtung (10, 110), die ausgebildet ist, um an einem Ausgangsflansch (3, 103) des Turbokompressors außerhalb des Schlauchs befestigt zu sein, und die radial von dem Schlauch umgeben ist, indem sie dort akustische Kammern (C1 und C2, C1' und C2') bildet,
wobei diese Vorrichtung mindestens zwei Teile (11 und 12, 111 und 112) umfasst, die miteinander durch Klipsen fest verbunden sind, von denen ein erster Teil (11, 111) mit Befestigungsmitteln (4) an dem Flansch ausgestattet ist und von denen ein zweiter Teil (12, 112) mindestens eine der Kammern mit dem ersten Teil definiert,
**dadurch gekennzeichnet, dass** sie ferner Spannmittel (5) des Schlauchs (2) im Bereich der Vorrichtung (10, 110) umfasst, die diesen Schlauch in unmittelbarer Nähe eines freien Endes (2a) des Schlauchs umschließen, das bestimmt ist, anliegend am Flansch (3, 103) montiert zu sein.

2. System (1, 101) nach Anspruch 1, **dadurch gekennzeichnet, dass** die Vorrichtung (10, 110) eine allgemein rohrförmige Geometrie aufweist und auf mindestens einem Kunststoff- oder Verbundmaterial basiert, wobei der erste und zweite Teil (11 und 12, 111 und 112) gemäß einer etwa kreisrunden kontinuierlichen oder diskontinuierlichen Klipslinie (13, 113) um eine Symmetrieachse (X) der Vorrichtung aufeinander geklipst sind.

3. System (1, 101) nach Anspruch 2, **dadurch gekennzeichnet, dass** der erster Teil (11, 111) aufweist:
- einen radialen, zum Schlauch (2) axial externen Befestigungsabschnitt (11A, 111A) mit einer ringförmigen Geometrie und umfassend die Befestigungsmittel (4),
- einen axialen Abschnitt (11B, 111D) im Kontakt mit einer Innenfläche (2b) des Schlauchs und definierend die mindestens eine Kammer (C1, C1') mit dem zweiten Teil (12, 112), und
- einen anderen axialen Abschnitt (11D, 111B) mit minimalem Durchmesser für die Vorrichtung.

4. System (1, 101) nach Anspruch 3, **dadurch gekennzeichnet, dass** der zweite Teil (12, 112) ein axiales Teilstück (12A, 112A) mit minimalem Durchmesser für die Vorrichtung aufweist, wobei das axiale Teilstück mittels mindestens eines ringförmigen oder kreisbogenförmigen (12a) axialen Raums (112a) die mindestens eine Kammer (C1, C1') mit dem axialen Abschnitt (11B, 111D) im Kontakt mit dem Schlauch (2) definiert, der ihm radial gegenübersteht.

5. System (1) nach den Ansprüchen 3 und 4, **dadurch gekennzeichnet, dass**:
- sich im ersten Teil (11) der axiale Abschnitt (11B) im Kontakt mit dem Schlauch (2) axial zwischen dem radialen Befestigungsabschnitt (11A) und dem axialen Abschnitt mit minimalem Durchmesser (11D) befindet, wobei ein radialer Verbindungsabschnitt (11C) diese zwei axialen Abschnitte miteinander verbindet und eine Resonanzkammer (C2) in Beziehung mit diesem axialen Abschnitt mit minimalem Durchmesser und mit dem Schlauch definiert, und dass
- der zweite Teil (12) von dem axialen Teilstück mit minimalem Durchmesser (12A) gebildet ist, dessen zylindrische Wand beispielsweise kreisbogenförmige Durchgangsöffnungen (12a) aufweist, wobei dieses axiale Teilstück auf den radialen Verbindungsabschnitt geklipst ist und diese Öffnungen eine Resonanzkammer (C1) in Beziehung mit diesem radialen Verbindungsabschnitt und dem axialen Abschnitt im Kontakt mit dem Schlauch definieren.

6. System (101) nach den Ansprüchen 3 und 4, **dadurch gekennzeichnet, dass**:
- sich im ersten Teil (111) der axiale Abschnitt mit minimalem Durchmesser (111B) axial zwischen dem radialen Befestigungsabschnitt (111A) und dem axialen Abschnitt (111D) im Kontakt mit dem Schlauch (2) befindet, wobei ein radialer Verbindungsabschnitt (111C) diese zwei axialen Abschnitte miteinander verbindet, und dass
- der zweite Teil (112) das axiale Teilstück mit minimalem Durchmesser (112A) aufweist, das sich radial nach außen mittels eines radialen Verbindungsteilstücks (112B) verlängert, dann mittels eines axialen Hilfsteilstücks (112C) mit Außendurchmesser, der etwa dem Innendurchmesser des axialen Abschnitts (111D) im Kontakt mit dem Schlauch entspricht, der auf dieses axiale Hilfsteilstück geklipst ist, wobei das axiale Teilstück mit minimalem Durchmesser eine erste Resonanzkammer (C2') an einem freien Ende dieses axialen Teilstücks in Beziehung mit dem ersten und zweite Teil und mit dem Schlauch und eine zweite Resonanzkammer (C1') axial zwischen seinem anderen freien Ende und dem axialen Abschnitt mit minimalem Durchmesser (111B) in Beziehung mit dem ersten und zweiten Teil definiert.

7. System (1, 101) nach einem der vorangehenden Ansprüche, **dadurch gekennzeichnet, dass** die Spannmittel (5) mindestens einen Spannring (5) umfassen, der im Bereich eines axialen Abschnitts (11B, 111D) des ersten Teils (11, 111) montiert ist, der sich an die Innenseite (2b) des Schlauchs (2) anschmiegt.

8. System (1, 101) nach einem der vorangehenden Ansprüche, **dadurch gekennzeichnet, dass** es ferner den Flansch (3, 103) aufweist, auf dem der erste Teil (11, 111) mittels der Befestigungsmittel (4) wie Schrauben befestigt ist, die sowohl den Flansch als auch einen radialen Befestigungsabschnitt (11A, 111A) dieses ersten Teils durchqueren, der axial außerhalb des Schlauchs (2) ist und an diesem Flansch anliegt, der eine ringförmige radiale Wand aufweist, die einen Durchgangsquerschnitt für das Fluid (F) aufweist, der etwa einem minimalen Durchgangsquerschnitt entspricht, der dem ersten und zweiten Teil (11 und 12, 111 und 112) gemeinsam ist.

9. Einlassleitung eines Turbokompressor-Verbrennungsmotors eines Kraftfahrzeugs, **dadurch gekennzeichnet, dass** sie ein Anschluss- und Lärmdämpfungssystem (1, 101) nach einem der vorangehenden Ansprüche umfasst.

## Claims

1. A connection and sound attenuation system (1, 101) for an intake line of a turbocharged heat engine of a motor vehicle, the system being intended to be traveled by a stream of pressurized gas (F) and to be brought up between a turbocompressor and a heat exchanger of the line and comprising:
- a flexible hose (2) for connecting to the line, and
- a nonmetallic sound attenuation device (10, 110) that is suitable for being fastened to an output flange (3, 103) of the turbocompressor outside the hose and that is radially gripped by the hose while forming acoustic chambers (C1 and C2, C1' and C2'),
this device comprising at least two parts (11 and 12, 111 and 112) secured to one another by clipping, whereof a first part (11, 111) is provided with fastening means (4) to said flange and whereof a second part (12, 112) defines at least one of said chambers with the first part,
**characterized in that** it further includes means (5) for gripping the hose (2) at the device (10, 110) that gripped said hose in the immediate vicinity of a free end (2a) of the hose that is intended to be mounted adjacent to said flange (3, 103).

2. The system (1, 101) according to claim 1, **characterized in that** the device (10, 110) has a globally tubular geometry and is made from a base of at least one plastic or composite material, said first and second parts (11 and 12, 111 and 112) being clipped on one another along a substantially circular continuous or discontinuous clipping line (13, 113) around an axis of symmetry (X) of the device.

3. The system (1, 101) according to claim 2, **characterized in that** said first part (11, 111) has:
- a radial fastening portion (11A, 111A) axially outside the hose (2), with an annular geometry and comprising said fastening means (4),
- an axial portion (11B, 111D) in contact with an inner face (2b) of the hose and defining said at least one chamber (C1, C1') with said second part (12, 112), and
- another axial portion (11D, 111 B) with a minimal diameter for the device.

4. The system (1, 101) according to claim 3, **characterized in that** said second part (12, 112) has an axial section (12A, 112A) with a minimal diameter for the device, said axial section defining, by at least one annular (112a) or arc of circle-shaped (12a) axial space, said at least one chamber (C1, C1') with said axial portion (11B, 111D) in contact with the hose (2) radially facing it.

5. The system (1) according to one of claims 3 and 4, **characterized in that**:
- in said first part (11), said axial portion (11B) in contact with the hose (2) is situated axially between said radial fastening portion (11A) and said axial portion of minimal diameter (11D), a radial connecting portion (11C) connecting these two axial portions to one another and defining a so-called resonance chamber (C2) in relation with that axial portion of minimal diameter and with the hose, and **in that**
- said second part (12) is made up of said axial segment of minima! diameter (12A), the cylindrical wall of which has through apertures (12A) for example with an arc of circle shape, this axial segment being clipped on said radial connecting portion and these apertures defining a so-called resonance chamber (C1) in relation with this radial connecting portion and said axial portion in contact with the hose.

6. The system (101) according to claims 3 and 4, **characterized in that**:
- in said first part (111), said axial portion of minimal diameter (111B) is situated axially between said radial fastening portion (111A) and said axial portion (111D) in contact with the hose (2), a radial connecting portion (111 C) connecting these two axial portions to one another, and **in that**
- said second part (112) includes said axial segment of minimal diameter (112A), which extends radially outward by a radial connecting segment (112B), then by an auxiliary axial segment (112C) with an outer diameter substantially equal to the inner diameter of said axial portion (111D) in contact with the hose that is clipped on that auxiliary axial segment, the axial segment of minimal diameter defining a first so-called resonance chamber (C2') at a free end of the axial segment in relation with said first and second parts and with the hose, and a second so-called resonance chamber (C1') axially between its other free end and said axial portion of minimal diameter (111B) in relation with said first and second parts.

7. The system (1, 101) according to one of the preceding claims, **characterized in that** said gripping means (5) comprise at least one gripping collar (5) mounted at an axial portion (11B, 111D) of said first part (11, 111) marrying the inner face (2b) of the hose (2).

8. The system (1, 101) according to one of the preceding claims, **characterized in that** it further includes said flange (3, 103), on which said first part (11, 111) is fastened by said fastening means (4), such as screws, which traverse both the flange and a radial fastening portion (11A, 111A) of this first part that is axially outside the hose (2) and juxtaposed against said flange, which has an annular radial wall defining a passage section for the fluid (F) substantially equal to a minimal passage section shared by said first and second parts (11 and 12, 111 and 112).

9. An intake line for a turbocharged heat engine of a motor vehicle, **characterized in that** it includes a connecting and sound attenuation system (1, 101) according to one of the preceding claims.
